(19) Europäisches Patentamt
European Patent Office
Office européen des brevets

(11) **EP 2 502 122 B1**

(12) **EUROPEAN PATENT SPECIFICATION**

(45) Date of publication and mention
of the grant of the patent:
**03.12.2014 Bulletin 2014/49**

(51) Int Cl.:
**H02M 5/12** *(2006.01)*  **G05F 1/14** *(2006.01)*

(21) Application number: **09752376.5**

(22) Date of filing: **17.11.2009**

(86) International application number:
**PCT/EP2009/065314**

(87) International publication number:
**WO 2011/060811 (26.05.2011 Gazette 2011/21)**

(54) **METHOD OF ADJUSTING A VOLTAGE ACROSS TERMINALS OF A LOAD**

VERFAHREN ZUR SPANNUNGSEINSTELLUNG BEI ENDGERÄTEN EINER LAST

PROCÉDÉ DE RÉGLAGE D'UNE TENSION AUX BORNES D'UNE CHARGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**26.09.2012 Bulletin 2012/39**

(73) Proprietors:
• **Alstom Technology Ltd.**
  **5400 Baden (CH)**
• **Schneider Electric Energy UK Ltd**
  **Telford TF3 3BL (GB)**

(72) Inventors:
• **WISZNIEWSKI, Andrzej**
  **PL-51-144 Wroclaw (PL)**
• **REBIZANT, Waldemar**
  **PL-53-678 Wroclaw (PL)**
• **KLIMEK, Andrzej**
  **Surrey, British Columbia VS3 7W8 (CA)**

(74) Representative: **Ilgart, Jean-Christophe et al**
**BREVALEX**
**95, rue d'Amsterdam**
**75378 Paris Cedex 8 (FR)**

(56) References cited:
EP-A1- 1 217 709    WO-A1-2005/078546
GB-A- 2 450 762    US-B1- 6 219 591

• YORINO N ET AL: "Voltage instability in a power system with single OLTC" PROCEEDINGS OF THE INTERNATIONAL SYMPOSIUM ON CIRCUITS AND SYSTEMS. SAN DIEGO, MAY 10 - 13, 1992; [PROCEEDINGS OF THE INTERNATIONAL SYMPOSIUM ON CIRCUITS AND SYSTEMS. (ISCAS)], NEW YORK, IEEE, US LNKD- DOI:10.1109/ISCAS.1992.230470, vol. 5, 3 May 1992 (1992-05-03), pages 2533-2536, XP010061576 ISBN: 978-0-7803-0593-9
• WISZNIEWSKI A: "New Criteria of Voltage Stability Margin for the Purpose of Load Shedding" IEEE TRANSACTIONS ON POWER DELIVERY, IEEE SERVICE CENTER, NEW YORK, NY, US, vol. 10, no. 3, 1 July 2007 (2007-07-01), pages 1367-1371, XP011186637 ISSN: 0885-8977
• LE FU ET AL: "Phasor measurement application for power system voltage stability monitoring" POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-8, XP031303877 ISBN: 978-1-4244-1905-0
• THIERRY VAN CUTSEM: "Voltage Instability: Phenomena, Countermeasures, and Analysis Methods" PROCEEDINGS OF THE IEEE, IEEE. NEW YORK, US, vol. 88, no. 2, 1 January 2000 (2000-01-01), XP011044340 ISSN: 0018-9219

EP 2 502 122 B1

**Description**

Technical field and prior art of the invention

The invention relates to a method of adjusting a voltage across terminals of a load and to an apparatus implementing the method of the invention.

Disturbances in electric power system often involve several modes of instability. To limit the consequences of disturbances leading to system instability the sound detection of abnormal situation and application of the well matched preventive actions are needed. During the large scale power system disturbance, the last line of defence which prevents the voltage collapse is the load shedding at the stations where the stability margin became too low. To do that, automatic devices are needed that process local signals, detect the decreased margin and activate the load shedding.

Today, as a criterion of operation of the undervoltage load shedding devices, the voltage criterion is adopted with either fixed and/or rate of change settings (see e.g. N. Yorino et al, "Voltage Instability in a Power System with Single OTC; US6219591 or EP1217709) . To analyze the cases of possible voltage collapse, the fixed voltage level setting is usually adopted as a criterion quantity. Disadvantage of such an approach is due to the relations between the voltage level and the stability limit, which depends very much on the source electromotive force and load power factor. Thus shedding the load automatically, without taking this relationship into account, does not assure that the system remains stable after operation is completed. It may also shed too much load unnecessarily. Therefore, there is a need for an improved method and an apparatus for protecting power system against collapse and blackout, which obviate the aforementioned problems with conventional load shedding techniques.

The load to source impedance ratio is a good tool to determine if the stability margin is so low that some load ought to be shed. Besides, the ratio may serve as a criterion whether the transformer tap changer ought to be blocked. It is needed for preventing the system from voltage collapse in some cases, since increasing the secondary voltage decreases the primary one, thus making the stability margin shrink. US patent US 6,249,719 and UK patent application GB 2 450 762 both disclose methods that initiate load shedding when the difference between the load impedance and the source impedance are close to zero. More particularly, GB 2 450 762 discloses a method of monitoring stability margin within an electrical power system comprising the steps of:

- establishing a dynamic power system stability margin based on an operating characteristic of the power system,
- indicating that the power system has become unstable when the dynamic power system stability margin falls below a predetermined value, and
- initiating dynamic load shedding and/or restoration depending on stability margin.

Problems encountered with the methods using load to source impedance ratio to determine the stability margin are:

- the methods need complex calculations,
- the methods are sensitive to errors in estimation of the angle of the system impedance,
- the methods ignore the relation between the load impedance and the voltage across it.

The invention does not have the above disadvantages.

Description of the invention

The invention provides a method of adjusting a voltage present across terminals of a load, the load being mounted across terminals of a secondary winding of a transformer having a primary winding and a secondary winding, the voltage being adjusted by modifying a position of a tap point along the first winding due to the action of a command signal on a tap changer connected to the primary winding, characterized in that said method comprises :

a step of determining a variation of the secondary voltage due to a variation of the primary voltage, said step of determining a variation of the secondary voltage being based on at least one measurement of said secondary voltage, and
a step of determining, by means of a computer, a relationship which indicates if a relative increase of the secondary voltage is greater than a relative decrease of the primary voltage or not, the position of the tap point being modified to increase the secondary voltage if a relative increase of the secondary voltage is greater than a relative decrease of the primary voltage, and the position of the tap point being blocked or reversed, if not.

According to a first embodiment of the invention, the method of adjusting a voltage present across terminals of a load comprises:

- measuring a primary voltage V between a first terminal of the primary winding and the tap point,
- measuring a secondary voltage V1 across the terminals of the secondary winding,
- calculating, by means of a computer:

  → a value g of a transformer-turns ratio of the transformer based on the primary voltage V and the secondary voltage V1 (g=V/V1), and
  → a critical value gc of said transformer-turns ratio which satisfies the condition:

$$(dV/dg) + (dV1/dg) = 0,$$

  dV/dg being the derivative of the function V(g) and dV1/dg being the derivative of the function V1(g),

- comparing g and gc to output a control signal depending on the result of the comparison, and
- if gc > g, the control signal controls the position of the tap point to increase the secondary voltage V1 if said secondary voltage is lower than a predetermined value, or
- if gc $\leq$ g, the control signal blocks the position of the tap point.

According to a supplementary feature of the first embodiment of the invention, after the position of the tap point has been modified to increase the secondary voltage V1, new values of g and gc are calculated and compared to output a new control signal, and:

- if gc > g, the new control signal controls the position of the tap point to increase the secondary voltage V1 if said secondary voltage is lower than the predetermined value, or
- if gc $\leq$ g, the new control signal blocks the position of the tap point.

According to another supplementary feature of the first embodiment of the invention, after the position of the tap point has been blocked, it further comprises:

- measuring a supplementary secondary voltage V1s,
- comparing the new secondary voltage V1s with a threshold value $V_{th}$, and
- executing a first load shedding if $V1_S \leq V_{th}$.

According to another supplementary feature of the first embodiment of the invention, after the first load shedding has been executed, new values of g and gc are calculated and compared to output a new control signal and:

- if gc > g, the new control signal controls the position of the tap point to increase the secondary voltage V1 if said secondary voltage is lower than a predetermined value, or
- if gc $\leq$ g, the position of the tap point remains blocked.

According to another supplementary feature of the first embodiment of the invention, if the position of the tap point remains blocked, it further comprises:

- measuring a supplementary secondary voltage V1s,
- comparing the supplementary secondary voltage V1s with the threshold value $V_{th}$, and
- executing a supplementary load shedding if $V1_S \leq Vth$.

According to another supplementary feature of the first embodiment of the invention, dV/dg and dV1/dg are:

$$\frac{dV}{dg} = \frac{-E_s\left(2X^2g^4 + 2Xg^2\cos\beta\right)\left(\dfrac{1}{g}\right)}{\left(1 + X^2g^4 + 2Xg^2\cos\beta\right)^{1.5}}$$

$$\frac{dV1}{dg} = \frac{E_S\left(1 - X^2 g^4\right)}{\left(1 + X^2 g^4 + 2Xg^2 \cos\beta\right)^{1.5}}$$

- $Z_S Y_1 = X$, with $Z_S$ a source impedance of an electricity source connected between a first terminal of the primary winding and the tap point of the primary winding and $Y_1$ the admittance of the load,
- $E_S$ is the amplitude of the voltage output from the electricity source, and
- $\beta$ is the angle difference between source impedance $Z_S$ and load impedance.

According to a second embodiment of the invention, the method comprises the following steps:

- measuring a primary voltage VB between a first terminal of the primary winding and the tap point when the tap point has a position p1,
- measuring a primary voltage VE between the first terminal of the primary winding and the tap point when the tap point has a position p2,
- calculating, by means of a computer, (VB-VE)/VB and (p2-p1)/(1+p2),
- comparing (VB-VE)/VB and (p2-p1)/(1+p2) to output a control signal, and
- if (VB-VE)/VB < (p2-p1)/(1+p2), the position of the tap point is modified to increase the secondary voltage V1 if said secondary voltage is lower than a predetermined value, and
- if (p2-p1)/(1+p2) $\leq$ (VB-VE)/VB, the position of the tap point is blocked or reversed.

According to a supplementary feature of the second embodiment of the invention, after the position of the tap point has been modified to increase the secondary voltage, new values of (VB-VE)/VB and (p2-p1)/(1+p2) are calculated and compared to output a new control signal and:

- if (VB-VE)/VB < (p2-p1)/(1+p2), the new control signal (d) controls the position of the tap point to increase the secondary voltage V1 if said secondary voltage is lower than a predetermined value, or
- if (p2-p1)/(1+p2) $\leq$ (VB-VE)/VB, the new control signal blocks the position of the tap point.

According to another supplementary feature of the second embodiment of the invention, after the position of the tap point has been blocked, it further comprises:

- measuring a secondary voltage $V1_S$,
- comparing the secondary voltage $V1_S$ with a threshold value $V_{th}$, and
- executing a first load shedding if $V1_S < V_{th}$.

According to another supplementary feature of the second embodiment of the invention, after the first load shedding has been executed, new value of (VB-VE)/VB and new value of (p2-p1)/(1+p2) are calculated and compared to output a new control signal depending on the result of the comparison, and

- if (VB-VE)/VB < (p2-p1)/(1+p2), the control signal (d) controls the position of the tap point to increase the secondary voltage V1 if said secondary voltage is lower than a predetermined value, or
- if (p2-p1)/(1+p2) $\leq$ (VB-VE)/VB, the position of the tap point remains blocked.

According to another supplementary feature of the second embodiment of the invention, if the position of the tap point remains blocked, the method further comprises:

- measuring a supplementary secondary voltage V1s,
- comparing the supplementary secondary voltage V1s with the threshold value $V_{th}$, and
- executing a supplementary load shedding if $V_{1S} \leq V_{th}$.

Brief description of the figures

Other characteristics and advantages of the invention will become clearer upon reading preferred embodiments of the invention made in reference to the attached figures among which:

- figure 1 shows an apparatus implementing a first embodiment of the method of the invention ; and
- figure 2 shows an apparatus implementing a second embodiment of the method of the invention.

In all the figures, the same references designate the same elements.

Detailed description of embodiments of the invention

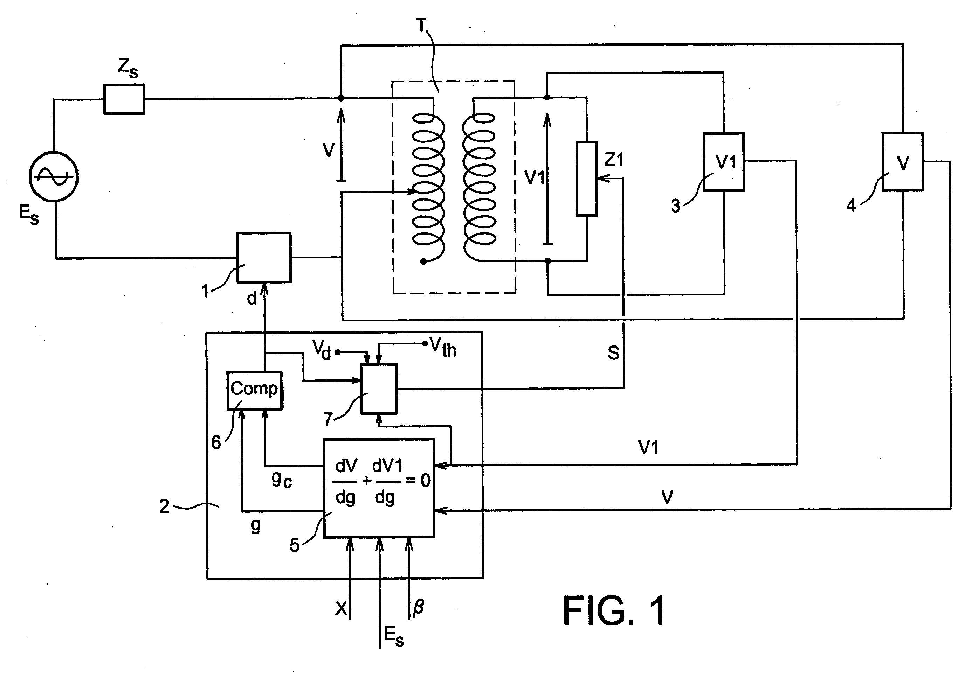

Figure 1 shows an apparatus implementing a first embodiment of the method of the invention. An electricity source (Es) and a source impedance (Zs) are connected, via a tap changer 1, between a first terminal of the primary winding of a transformer T and the tap point of the primary winding and a load Z1 is connected between the two terminals of the secondary winding of the transformer T. The apparatus that implements the first embodiment of the invention comprises the tap changer 1, a computer 2 and two voltmeters 3, 4. The computer 2 comprises a calculation unit 5, a comparator 6 and a control unit 7. The voltmeter 3 measures the voltage V1 between the two terminals of the load Z1 and the voltmeter 4 measures the voltage V between the first terminal of the primary winding and the tap point of the primary winding. The computer 2 calculates a control signal d that controls the position of the tap point of the tap changer 1 and a control signal S that controls the load shedding of load Z1.

According to the first embodiment of the invention, the control signal d controls the tap changer 1 so that the tap changer is blocked at a position, hereafter called the "critical position", at which the relative increase of the secondary voltage V1 becomes equal to the relative decrease of the primary voltage V.

If the tap changer 1 tries to further increase the secondary voltage V1, the primary voltage V would decrease more than the secondary voltage V1 increases, and there would be a total loss. Therefore the tap changer 1 may keep increasing the secondary voltage V1 if it results in the total gain, and be blocked if it is otherwise.

If the tap changer 1 is blocked and the secondary voltage V1 reaches a threshold value $V_{th}$ unacceptably low, the remedy is to initiate undervoltage load shedding by means of the control signal S. To do so, the control unit 7 compares the measured voltage V1 with the threshold value $V_{th}$ and, if the measured voltage V1 is less or equal to the threshold value $V_{th}$, the control signal S output from the control unit 7 disconnects a first part of the load Z1. After the first part of the load becomes disconnected, there is another round of checking the critical position of the tap changer.

The method of adjusting the voltage V1 according to the first embodiment of the invention comprises the following steps:

- measuring, by means of the voltmeter 4, the primary voltage V between the first terminal of the primary winding and the tap point of the primary winding;
- measuring, by means of the voltmeter 3, the secondary voltage V1 across the terminals of the secondary winding;
- calculating, by means of the computer 2, a value g of the transformer-turns ratio of the transformer T based on the measured primary voltage V and the secondary voltage V1 (g=V/V1);
- calculating, by means of the calculation unit 5, a critical value gc of said transformer-turns ratio which satisfies the condition:

$$(dV/dg) + (dV1/dg) = 0,$$

dV/dg being the derivative of the function V(g) and dV1/dg being the derivative of the function V1(g);
- comparing, by means of the comparator 6, g and $g_C$ to output a comparison result; and
- modifying or maintaining the position of the tap point due to the action of a control signal d depending on the comparison result.

During the working of the system, decrease of secondary voltage V1 causes operation of the transformer tap changing device, which should increase the voltage.

After each change of taps, the value of the critical tap changer position gc is determined. Tap changer critical position may be determined through calculation of the load to source impedance ratio either by use of the measured *dS/dY* or by use of the measured *dV/dY:*

$$\frac{dS}{dY} = V^2 \frac{1 - (Z_S Y)^2 - 2(Z_S Y)\left[Y\frac{d(\cos\beta)}{dY}\right]}{1 + (Z_S Y)^2 + 2(Z_S Y)\cos\beta}$$

$$\frac{dV}{dY} = \frac{-V\left((Z_S Y)^2 + Z_S Y\cos\beta + Z_S Y^2 \frac{d(\cos\beta)}{dY}\right)}{\left(1 + (Z_S Y)^2 + 2(Z_S Y)\cos\beta\right)^{1.5} Y}$$

where:

- $Z_S$ is the source impedance;
- S is the apparent power at the terminals of the primary winding;
- Y is the admittance seen from the terminals of the primary winding ( $Y = Y_1 g^2 = \dfrac{g^2}{Z_1}$ ) ;
- $\beta$ is the angle difference between the source impedance $Z_S$ and the load impedance $Z_L$ ($Z_L = Z1/g^2$):

$$\beta = arg(Z_S) - arg(Z_L)$$

Denoting: $Z_S Y_1 = X$

$$\frac{dV}{dg} = \frac{-E_S\left(2X^2 g^4 + 2Xg^2\cos\beta\right)\left(\frac{1}{g}\right)}{\left(1 + X^2 g^4 + 2Xg^2\cos\beta\right)^{1.5}}$$

$$\frac{dV1}{dg} = \frac{E_S\left(1 - X^2 g^4\right)}{\left(1 + X^2 g^4 + 2Xg^2\cos\beta\right)^{1.5}}$$

In the above formulas, $E_S$ is the amplitude of the voltage output from the electricity source ($E_S$).

The critical position of the tap changing device at which the increase of the secondary relative voltage $V_1$ is equal to the decrease of the primary voltage V is determined by the following formula:

$$\frac{dV}{dg} + \frac{dV1}{dg} = 0$$

The value of g which satisfies the above condition is the critical value marked $g_C$. The values of g and $g_C$ are calculated by the calculation unit 5 with the help of the measured values V1 and V and the known values of $E_S$, $\beta$ and X. If the actual position g of the tap changer is lower then $g_C$, further increase of the tap position, and in consequence increase of the secondary voltage is permitted. Then, the control signal d controls the position of the tap point to increase the secondary voltage V1 if said secondary voltage V1 is lower than a predetermined voltage $V_d$. To this end, the control unit 7 compares the measured value V1 with the predetermined value $V_d$. Otherwise the tap changer ought to be blocked.

If the tap changer is blocked, and the secondary voltage level is still too low, or decreasing, a first stage of load shedding is executed.

After partial disconnection of the load, the procedure is repeated. The new level of the critical tap changer position is to be determined, what leads to the decision whether the tap changer ought to become unblocked, or not.

If the tap changer becomes unblocked, and the secondary voltage is too low (i.e. lower than $V_{th}$), the tap changer may operate to increase the secondary voltage. After each change of taps it ought to be determined if it was the "total gain" or the "total loss". In case of the "total gain" further operation of the tap changer is accepted, otherwise the tap changer becomes blocked.

If the tap changer was blocked and the secondary voltage is too low, the next operation of the load shedding is to be initiated, what results in disconnection of a next portion of the transformer load.

The procedure beginning from the partial disconnection of the load is to be repeated until the critical level of load is reached (established by the system operator).

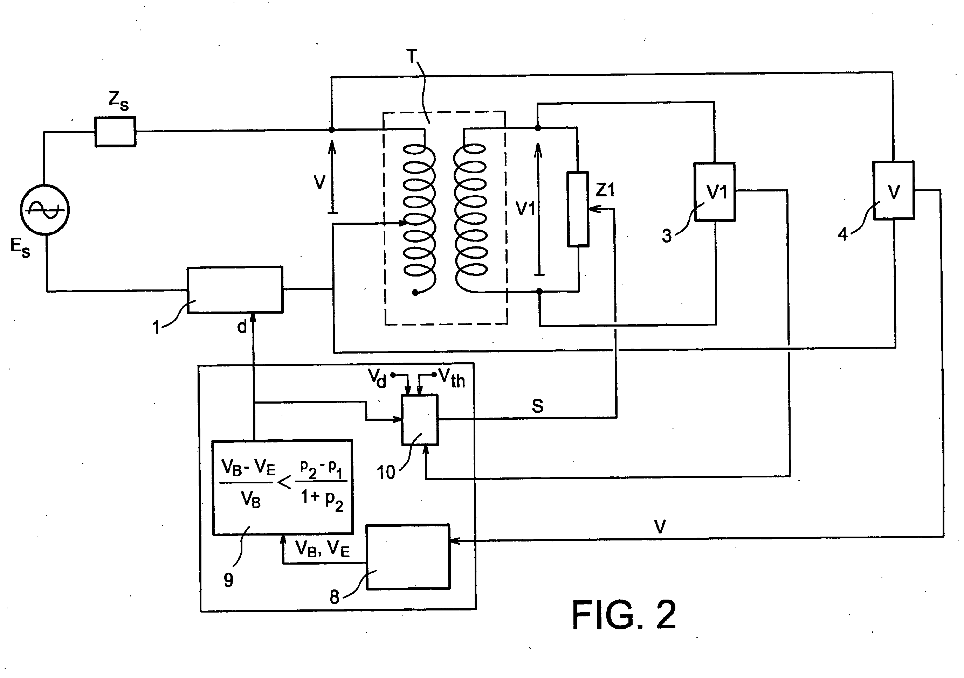

In case $Z_S Y_1$ is unknown, there is another way of checking, whether the last change of the tap changer caused the "net gain" (i.e. increase of the secondary relative voltage is greater than decrease of the primary voltage) or the "net loss". This other way corresponds to a second embodiment of the invention. Figure 2 shows an apparatus implementing the second embodiment of the invention.

The apparatus according to the second embodiment of the invention comprises a tap changer 1, a calculator 2, and voltmeters 3 and 4. The voltmeter 3 measures the voltage V1 between the two terminals of the load Z1 and the voltmeter 4 measures the voltage V between the first terminal of the primary winding and the tap point. The calculator 2 comprises a memory 8 to store the measured values of voltage V, a calculating unit 9 and a control unit 10.

First, the calculating unit 9 calculates two quantities, i.e.:

- the quantity $\dfrac{V_B - V_E}{V_B}$ , where $V_B$ is the measured primary voltage before the tap changer operated and $V_E$ is the measured primary voltage after the tap changer operated; and

- the quantity $\dfrac{p_2 - p_1}{1 + p_2}$ , where $p_1$ is the initial position of the tap changer (before the tap changer operated) and $p_2$ is the final position of the tap changer (after the tap changer operated).

The measured primary voltages $V_B$ and $V_E$ are stored in the memory 8 and entered into the calculating unit 9. The initial and final positions p1 and p2 are output from the tap changer 1 and entered into the calculating unit 9.

Then, the calculation unit compares $\dfrac{V_B - V_E}{V_B}$ and $\dfrac{p_2 - p_1}{1 + p_2}$ .

The step increase of the tap changer was advantageous if:

$$\frac{V_B - V_E}{V_B} < \frac{p_2 - p_1}{1 + p_2}$$

If the above condition is satisfied, the last change of taps caused the net gain. Therefore a next step of tap increase is permitted. If (p2-p1)/(1+p2) ≤ (VB-VE)/VB, the tap point is blocked.

If a next step of tap is permitted, the control signal d controls the position of the tap point to increase the secondary voltage V1 if said secondary voltage is lower then a predetermined value $V_d$. To this end, the control unit 10 compares the measured value V1 with the predetermined value $V_d$. After, the position of the tap point has been modified, new values of (VB-VE)/VB and (p2-p1)/(1+p2) are calculated and compared and the position of the tap point is modified to increase the secondary voltage V1 if (VB-VE)/VB < (p2-p1)/(1+p2), and is blocked if (p2-p1)/(1+p2) ≤ (VB-VE)/VB.

If the tap point has been blocked (p2-p1)/(1+p2) ≤ (VB-VE)/VB), the following steps are implemented:

- measuring a secondary voltage V1s by means of the voltmeter 3,
- comparing the secondary voltage V1s with a threshold value $V_{th}$ by means of the control unit 10, and
- executing a first load shedding by means of the control signal S output from the control unit 10 if $V1_S$ ≤ Vth.

After the first load shedding has been executed, a new value of (VB-VE)/VB and a new value of (p2-p1)/(1+p2) are calculated and compared. The position of the tap point remains blocked as long as (p2-p1)/(1+p2) ≤ (VB-VE)/VB and is released as soon as (VB-VE)/VB < (p2-p1)/(1+p2).

The invention presents a new criterion of the tap changing control and a new method of determining the position at which the tap changing device ought to be blocked to avoid unacceptable decrease of the voltage stability margin.

**Claims**

1.  Method of adjusting a voltage present across terminals of a load, the load being mounted across terminals of a secondary winding of a transformer (T) comprising a primary winding having a primary voltage (V) between its terminals and a secondary winding having a secondary voltage (V1) between its terminals, the voltage being adjusted by modifying a position of a tap point along the first winding due to the action of a command signal (d) on a tap changer (1) connected to the primary winding, **characterized in that** said method comprises:

    - a step of varying the command signal (d) to change the tap point from a first position p1 to a second position p2,
    - a step of measuring the primary voltage (V) and the secondary voltage (V1) for each first and second position of the tap point,
    - a step of determining, by means of a computer (2), a relative increase of the secondary voltage and a relative decrease of the primary voltage, and
    - a calculation step which comprises a step of determining, by means of a computer (2), a relationship which indicates if the relative increase of the secondary voltage is greater than the relative decrease of the primary voltage or not, the position of the tap point being modified to increase the secondary voltage if a relative increase of the secondary voltage is greater than a relative decrease of the primary voltage, and the position of the tap point being blocked or reversed, if not.

2.  Method of adjusting a voltage present across terminals of a load according to claim 1, wherein the calculation step comprises:

    - calculating by means of a computer (2):

        $\rightarrow$ a value g of a transformer-turns ratio of the transformer based on the measured primary voltage V and the measured secondary voltage V1 (g=V/V1) for each first and second tap point position, and
        $\rightarrow$ a critical value gc of said transformer-turns ratio which satisfies the condition:

$$(dV/dg) + (dV1/dg) = 0,$$

        dV/dg being the derivative of the function V(g) and dV1/dg being the derivative of the function V1(g),

    - comparing g and gc to output a control signal (d) depending on the result of the comparison, and
    - if gc > g, the control signal controls the position of the tap point to increase the secondary voltage V1 if said secondary voltage is lower than a predetermined value, or
    - if gc $\leq$ g, the control signal blocks the position of the tap point.

3.  Method according to claim 2 when gc > g, wherein, after the position of the tap point has been modified to increase the secondary voltage V1, new values of g and gc are calculated and compared to output a new control signal, and:

    - if gc > g, the new control signal controls the position of the tap point to increase the secondary voltage V1 if said secondary voltage is lower than the predetermined value, or
    - if gc $\leq$ g, the new control signal blocks the position of the tap point.

4.  Method according to claim 2 when gc $\leq$ g, wherein, after the position of the tap point has been blocked, it further comprises:

    - measuring a new secondary voltage V1s,
    - comparing the new secondary voltage V1s with a threshold value $V_{th}$, and
    - executing a first load shedding if $V1_S \leq V_{th}$.

5.  Method according to claim 4 wherein, after the first load shedding has been executed, new values of g and gc are calculated and compared to output a new control signal and:

- if gc > g, the new control signal controls the position of the tap point to increase the secondary voltage V1 if said secondary voltage is lower than a predetermined value, or
- if gc $\leq$ g, the position of the tap point remains blocked.

6. Method according to claim 5 wherein, if the position of the tap point remains blocked, it further comprises:

- measuring a supplementary secondary voltage V1s,
- comparing the supplementary secondary voltage V1s with the threshold value $V_{th}$, and
- executing a supplementary load shedding if $V1_S \leq$ Vth.

7. Method according to any claims 2-6, wherein:

$$\frac{dV}{dg} = \frac{-E_S\left(2X^2g^4 + 2Xg^2\cos\beta\right)\left(\dfrac{1}{g}\right)}{\left(1 + X^2g^4 + 2Xg^2\cos\beta\right)^{1.5}}$$

$$\frac{dV1}{dg} = \frac{E_S\left(1 - X^2g^4\right)}{\left(1 + X^2g^4 + 2Xg^2\cos\beta\right)^{1.5}}$$

- $Z_S Y_1 = X$, with $Z_S$ a source impedance of an electricity source connected between a first terminal of the primary winding and the tap point of the primary winding and $Y_1$ the admittance of the load,
- $E_S$ is the amplitude of the voltage output from the electricity source, and
- $\beta$ is the angle difference between source impedance $Z_S$ and load impedance.

8. Method of adjusting a voltage present across terminals of a load according to claim 1, wherein the step of measuring the primary voltage comprises:

- measuring a primary voltage VB between a first terminal of the primary winding and the tap point when the tap point has the first position p1, and
- measuring a primary voltage VE between the first terminal of the primary winding and the tap point when the tap point has the second position p2,

and wherein the calculation step comprises:

- calculating, by means of a computer, (VB-VE)/VB and (p2-p1)/(1+p2),
- comparing (VB-VE)/VB and (p2-p1)/(1+p2) to output a control signal, and
- if (VB-VE)/VB < (p2-p1)/(1+p2), the position of the tap point is modified to increase the secondary voltage if the measured secondary voltage is lower than a predetermined value, and
- if (p2-p1)/(1+p2) $\leq$ (VB-VE)/VB, the position of the tap point is blocked or reversed.

9. Method according to claim 8 when (VB-VE)/VB > (p2-p1)/(1+p2), wherein, after the position of the tap point has been modified to increase the secondary voltage V1, new values of (VB-VE)/VB and (p2-p1)/(1+p2) are calculated and compared to output a new control signal and:

- if (VB-VE)/VB < (p2-p1)/(1+p2), the new control signal (d) controls the position of the tap point to increase the secondary voltage V1 if said secondary voltage is lower than a predetermined value, or
- if (p2-p1)/(1+p2) $\leq$ (VB-VE)/VB, the new control signal blocks the position of the tap point.

10. Method according to claim 8 when (p2-p1)/(1+p2) $\leq$ (VB-VE)/VB, wherein, after the position of the tap point has been blocked, it further comprises:

- measuring a secondary voltage $V1_S$,
- comparing the secondary voltage $V1_S$ with a threshold value $V_{th}$, and
- executing a first load shedding if $V1_S \leq V_{th}$.

11. Method according to claim 10 wherein, after the first load shedding has been executed, new value of (VB-VE)/VB and new value of (p2-p1)/(1+p2) are calculated and compared to output a new control signal depending on the result of the comparison, and

- if (VB-VE)/VB < (p2-p1)/(1+p2), the control signal (d) controls the position of the tap point to increase the secondary voltage V1 if said secondary voltage is lower than a predetermined value, or
- if (p2-p1)/(1+p2) ≤ (VB-VE)/VB, the position of the tap point remains blocked.

12. Method according to claim 11 wherein, if the position of the tap point remains blocked, it further comprises:

- measuring a supplementary secondary voltage V1s,
- comparing the supplementary secondary voltage V1s with the threshold value $V_{th}$, and
- executing a supplementary load shedding if $V_{1S} \leq V_{th}$.

**Patentansprüche**

1. Verfahren zum Einstellen einer Spannung, die über Anschlüsse einer Last hinweg vorhanden ist, wobei die Last über Anschlüsse einer Sekundärwicklung eines Transformators (T) hinweg montiert ist, der eine Primärwicklung mit einer Primärspannung (V) zwischen deren Anschlüssen und eine Sekundärwicklung mit einer Sekundärspannung (V1) zwischen deren Anschlüssen umfasst, wobei die Spannung eingestellt wird, indem eine Position eines Abgriffpunkts entlang der ersten Wicklung aufgrund der Einwirkung eines Befehlssignals (d) auf eine Abgriffveränderungsvorrichtung (1), die mit der Primärwicklung verbunden ist, modifiziert wird,
**dadurch gekennzeichnet, dass** das Verfahren umfasst:

- einen Schritt des Veränderns des Befehlssignals (d), um den Abgriffpunkt von einer ersten Position p1 zu einer zweiten Position p2 zu verändern,
- einen Schritt des Messens der Primärspannung (V) und der Sekundärspannung (V1) für sowohl die erste als auch die zweite Position des Abgriffpunkts,
- einen Schritt des Feststellens einer relativen Zunahme der Sekundärspannung und einer relativen Abnahme der Primärspannung mit Hilfe eines Computers (2), und
- einen Berechnungsschritt, der einen Schritt des Bestimmens einer Beziehung mit Hilfe eines Computers (2) umfasst, welche anzeigt, ob die relative Zunahme der Sekundärspannung größer als die relative Abnahme der Primärspannung ist oder nicht, wobei die Position des Abgriffpunkts modifiziert wird, um die Sekundärspannung zu erhöhen, wenn eine relative Zunahme der Sekundärspannung größer als eine relative Abnahme der Primärspannung ist, und die Position des Abgriffspunkts blockiert oder umgedreht wird, wenn nicht.

2. Verfahren zum Einstellen einer Spannung, die über Anschlüsse einer Last hinweg vorhanden ist, nach Anspruch 1, wobei der Berechnungsschritt umfasst, dass:

- mit Hilfe eines Computers (2) berechnet wird:

  → ein Wert g eines Transformator-Wicklungsverhältnisses des Transformators auf der Grundlage der gemessenen Primärspannung V und der gemessenen Sekundärspannung V1 (g = V/V1) für sowohl die erste als auch die zweite Abgriffpunktposition, und
  → ein kritischer Wert gc des Transformator-Wicklungsverhältnisses, welcher die Bedingung erfüllt:

$$(dV/dg) + (dV1/dg) = 0,$$

  wobei dV/dg die Ableitung der Funktion V(g) ist und dV1/dg die Ableitung der Funktion V1(g) ist,

- g mit gc verglichen wird, um ein Steuerungssignal (d) in Abhängigkeit von dem Ergebnis des Vergleichs auszugeben, und
- wenn gc > g, das Steuerungssignal die Position des Abgriffpunkts so steuert, dass die Sekundärspannung V1 erhöht wird, wenn die Sekundärspannung kleiner als ein vorbestimmter Wert ist, oder
- wenn gc ≤ g, das Steuerungssignal die Position des Abgriffpunkts blockiert.

3.  Verfahren nach Anspruch 2,
wenn gc > g, wobei, nachdem die Position des Abgriffpunkts modifiziert worden ist, um die Sekundärspannung V1 zu erhöhen, neue Werte für g und gc berechnet und verglichen werden, um ein neues Steuerungssignal auszugeben, und:

- wenn gc > g, das neue Steuerungssignal die Position des Abgriffpunkts so steuert, dass die Sekundärspannung V1 erhöht wird, wenn die Sekundärspannung kleiner als der vorbestimmte Wert ist, oder
- wenn gc ≤ g, das neue Steuerungssignal die Position des Abgriffpunkts blockiert.

4.  Verfahren nach Anspruch 2,
wenn gc ≤ g, wobei es, nachdem die Position des Abgriffpunkts blockiert worden ist, ferner umfasst, dass:

- eine neue Sekundärspannung V1s gemessen wird,
- die neue Sekundärspannung V1s mit einem Schwellenwert $V_{th}$ verglichen wird, und
- ein erster Lastabwurf ausgeführt wird, wenn V1s ≤ $V_{th}$ ist.

5.  Verfahren nach Anspruch 4,
wobei, nachdem der erste Lastabwurf ausgeführt worden ist, neue Werte für g und gc berechnet und verglichen werden, um ein neues Steuerungssignal auszugeben, und:

- wenn gc > g, das neue Steuerungssignal die Position des Abgriffpunkts so steuert, dass die Sekundärspannung V1 erhöht wird, wenn die Sekundärspannung kleiner als ein vorbestimmter Wert ist, oder
- wenn gc ≤ g, die Position des Abgriffpunkts blockiert bleibt.

6.  Verfahren nach Anspruch 5,
wobei, wenn die Position des Abgriffpunkts blockiert bleibt, es ferner umfasst, dass:

- eine zusätzliche Sekundärspannung V1s gemessen wird,
- die zusätzliche Sekundärspannung V1 s mit dem Schwellenwert $V_{th}$ verglichen wird und
- ein zusätzlicher Lastabwurf ausgeführt wird, wenn V1s ≤ $V_{th}$.

7.  Verfahren nach einem der Ansprüche 2 - 6, wobei:

$$\frac{dV}{dg} = \frac{-E_S\left(2X^2g^4 + 2Xg^2\cos\beta\left(\frac{1}{g}\right)\right)}{\left(1 + X^2g^4 + 2Xg^2\cos\beta\right)^{1.5}}$$

$$\frac{dV1}{dg} = \frac{E_S\left(1 - X^2g^4\right)}{\left(1 + X^2g^4 + 2Xg^2\cos\beta\right)^{1.5}}$$

- $Z_S Y_1 = X$, wobei Zs eine Quellenimpedanz einer Elektrizitätsquelle ist, die zwischen einem ersten Anschluss der Primärwicklung und dem Abgriffpunkt der Primärwicklung verbunden ist, und $Y_1$ die Admittanz der Last ist,
- Es die Amplitude der Spannungsausgabe aus der Elektrizitätsquelle ist, und
- β die Winkeldifferenz zwischen der Quellenimpedanz Zs und einer Lastimpedanz ist.

8.  Verfahren zum Einstellen einer Spannung, die über Anschlüsse einer Last hinweg vorhanden ist, nach Anspruch 1, wobei der Schritt des Messens der Primärspannung umfasst, dass:

- eine Primärspannung VB zwischen einem ersten Anschluss der Primärwicklung und dem Abgriffpunkt gemessen wird, wenn der Abgriffpunkt die erste Position p1 aufweist, und
- eine Primärspannung VE zwischen dem ersten Anschluss der Primärwicklung und dem Abgriffpunkt gemessen wird, wenn der Abgriffpunkt die zweite Position p2 aufweist,

und wobei der Berechnungsschritt umfasst, dass:

- mit Hilfe eines Computers (VB-VE)/VB und (p2 - p1)/(1+p2) berechnet werden,
- (VB-VE)NB und (p2-p1)/(1+p2) verglichen werden, um ein Steuerungssignal auszugeben und
- wenn (VB-VE)/VB < (p2-p1)/(1+p2), die Position des Abgriffpunkts so modifiziert wird, dass die Sekundärspannung erhöht wird, wenn die gemessene Sekundärspannung kleiner als ein vorbestimmter Wert ist, und
- wenn (p2-p1)/(1+p2) ≤ (VB-VE)/VB, die Position des Abgriffpunkts blockiert oder umgedreht wird.

9. Verfahren nach Anspruch 8,
wenn (VB-VE)/VB > (p2-p1)/(1+p2), wobei, nachdem die Position des Abgriffpunkts modifiziert worden ist, um die Sekundärspannung V1 zu erhöhen, neue Werte für (VB-VE)/VB und (p2-p1)/(1+p2) berechnet und verglichen werden, um ein neues Steuerungssignal auszugeben, und:

- wenn (VB-VE)/VB < (p2-p1)/(1+p2), das neue Steuerungssignal (d) die Position des Abgriffpunkts so steuert, dass die Sekundärspannung V1 erhöht wird, wenn die Sekundärspannung kleiner als ein vorbestimmter Wert ist, oder
- wenn (p2-p1)/(1+p2) ≤ (VB-VE)/VB, das neue Steuerungssignal die Position des Abgriffpunkts blockiert.

10. Verfahren nach Anspruch 8,
wenn (p2-p1)/(1+p2) ≤ (VB-VE)/VB, wobei, nachdem die Position des Abgriffpunkts blockiert worden ist, das Verfahren ferner umfasst, dass:

- eine Sekundärspannung $V1_s$ gemessen wird,
- die Sekundärspannung $V1_s$ mit einem Schwellenwert $V_{th}$ verglichen wird und
- ein erster Lastabwurf ausgeführt wird, wenn $V1_s \leq V_{th}$.

11. Verfahren nach Anspruch 10,
wobei, nachdem der erste Lastabwurf ausgeführt worden ist, ein neuer Wert für (VB-VE)/VB und ein neuer Wert für (g2-g1)/(1+g2) berechnet und verglichen werden, um ein neues Steuerungssignal in Abhängigkeit von dem Ergebnis des Vergleichs auszugeben, und

- wenn (VB-VE)/VB < (p2-p1)/(1+p2), das Steuerungssignal (d) die Position des Abgriffpunkts so steuert, dass die Sekundärspannung V1 erhöht wird, wenn die Sekundärspannung kleiner als ein vorbestimmter Wert ist, oder
- wenn (p2-p1)/(1+p2) ≤ (VB-VE)/VB, die Position des Abgriffpunkts blockiert bleibt.

12. Verfahren nach Anspruch 11,
wobei, wenn die Position des Abgriffpunkts blockiert bleibt, das Verfahren ferner umfasst, dass:

- eine zusätzliche Sekundärspannung V1 s gemessen wird,
- die zusätzliche Sekundärspannung V1s mit dem Schwellenwert $V_{th}$ verglichen wird und
- wenn $V1_s \leq V_{th}$ ist, ein zusätzlicher Lastabwurf ausgeführt wird.

## Revendications

1. Procédé de réglage d'une tension présente aux bornes d'une charge, la charge étant montée aux bornes d'un enroulement secondaire d'un transformateur (T) comprenant un enroulement primaire ayant une tension primaire (V) entre ses bornes et un enroulement secondaire ayant une tension secondaire (V1) entre ses bornes, la tension étant réglée en modifiant une position d'un point de prise le long du premier enroulement par l'action d'un signal de commande (d) sur un changeur de prise (1) connecté à l'enroulement primaire, **caractérisé en ce que** ledit procédé comprend :

- une étape de variation du signal de commande (d) pour faire passer le point de prise d'une première position p1 à une seconde position p2,

- une étape de mesure de la tension primaire (V) et de la tension secondaire (V1) pour chaque première et seconde position du point de prise,

- une étape de détermination, au moyen d'un ordinateur (2), d'une augmentation relative de la tension secondaire et d'une diminution relative de la tension primaire, et

- une étape de calcul qui comprend une étape de détermination, au moyen d'un ordinateur (2), d'une relation qui indique si l'augmentation relative de la tension secondaire est supérieure à la diminution relative de la tension primaire ou non, la position du point de prise étant modifiée pour augmenter la tension secondaire si une augmentation relative de la tension secondaire est supérieure à une diminution relative de la tension primaire, et la position du point de prise étant bloquée ou inversée, si ce n'est pas le cas.

2. Procédé de réglage d'une tension présente aux bornes d'une charge selon la revendication 1, dans lequel l'étape de calcul comprend :

- le calcul, au moyen d'un ordinateur (2) :

→ d'une valeur g d'un rapport de spires de transformateur du transformateur basé sur la tension primaire V mesurée et la tension secondaire V1 mesurée (g = V / V1) pour chaque première et seconde position de point de prise, et

→ une valeur critique gc dudit rapport de spires de transformateur qui satisfait la condition :

$$(dV \ / \ dg) \ + \ (dV1 \ / \ dg) \ = \ 0,$$

dV / dg étant la dérivée de la fonction V(g) et dV1 / dg étant la dérivée de la fonction V1(g),

- la comparaison de g et gc pour fournir en sortie un signal de commande (d) dépendant du résultat de la comparaison, et

- si gc > g, le signal de commande commande la position du point de prise pour augmenter la tension secondaire V1 si ladite tension secondaire est inférieure à une valeur prédéterminée, ou

- si gc ≤ g, le signal de commande bloque la position du point de prise.

3. Procédé selon la revendication 2 lorsque gc > g, dans lequel, après que la position du point de prise a été modifiée pour augmenter la tension secondaire V1, de nouvelles valeurs de g et gc sont calculées et comparées pour fournir en sortie un nouveau signal de commande, et :

- si gc > g, le nouveau signal de commande commande la position du point de prise pour augmenter la tension secondaire V1 si ladite tension secondaire est inférieure à la valeur prédéterminée, ou

- si gc ≤ g, le nouveau signal de commande bloque la position du point de prise.

4. Procédé selon la revendication 2 lorsque gc ≤ g, comprenant en outre, après que la position du point de prise a été bloquée :

- la mesure d'une nouvelle tension secondaire V1s,

- la comparaison de la nouvelle tension secondaire $V1_s$ à une valeur seuil $V_{th}$, et

- l'exécution d'un premier délestage de charge si $V1_s \leq V_{th}$.

5. Procédé selon la revendication 4 dans lequel, après que le premier délestage de charge a été exécuté, de nouvelles valeurs de g et gc sont calculées et comparées pour fournir en sortie un nouveau signal de commande et :

- si gc > g, le nouveau signal de commande commande la position du point de prise pour augmenter la tension secondaire V1 si ladite tension secondaire est inférieure à une valeur prédéterminée, ou

- si gc ≤ g, la position du point de prise reste bloquée.

6. Procédé selon la revendication 5, comprenant en outre, si la position du point de prise reste bloquée :

- la mesure d'une tension secondaire supplémentaire $V1_s$,

- la comparaison de la tension secondaire supplémentaire $V1_s$ à la valeur seuil $V_{th}$, et
- l'exécution d'un délestage de charge supplémentaire si $V1_s \leq V_{th}$.

7. Procédé selon l'une quelconque des revendications 2 à 6, dans lequel :

$$\frac{dV}{dg} = \frac{-E_S\left(2X^2g^4 + 2Xg^2\cos\beta\right)\left(\frac{1}{g}\right)}{\left(1 + X^2g^4 + 2Xg^2\cos\beta\right)^{1.5}}$$

$$\frac{dV1}{dg} = \frac{E_S\left(1 - X^2g^4\right)}{\left(1 + X^2g^4 + 2Xg^2\cos\beta\right)^{1.5}}$$

- $Z_S Y_1 = X$, $Z_s$ étant une impédance de source d'une source d'électricité connectée entre une première borne de l'enroulement primaire et le point de prise de l'enroulement primaire et $Y_1$ l'admittance de la charge,
- $E_S$ est l'amplitude de la tension fournie en sortie par la source électrique, et
- $\beta$ est la différence d'angle entre l'impédance de source $Z_S$ et l'impédance de charge.

8. Procédé de réglage d'une tension présente aux bornes d'une charge selon la revendication 1, dans lequel l'étape de mesure de la tension primaire comprend :

- la mesure d'une tension primaire VB entre une première borne de l'enroulement primaire et le point de prise lorsque le point de prise est dans la première position p1, et
- la mesure d'une tension primaire VE entre la première borne de l'enroulement primaire et le point de prise lorsque le point de prise est dans la seconde position p2,

et dans lequel l'étape de calcul comprend :

- le calcul, au moyen d'un ordinateur, de (VB - VE) / VB et (p2 - p1) / (1 + p2),
- la comparaison de (VB - VE) / VB et (p2 - p1) / (1 + p2) pour fournir en sortie un signal de commande, et
- si (VB - VE) / VB < (p2 - p1) / (1 + p2), la position du point de prise est modifiée pour augmenter la tension secondaire si la tension secondaire mesurée est inférieure à une valeur prédéterminée, et
- si (p2 - p1) / (1 + p2) ≤ (VB - VE) / VB, la position du point de prise est bloquée ou inversée.

9. Procédé selon la revendication 8 lorsque (VB - VE) / VB > (p2 - p1) / (1 + p2), dans lequel, après que la position du point de prise a été modifiée pour augmenter la tension secondaire V1, de nouvelles valeurs de (VB - VE) / VB et (p2 - p1) / (1 + p2) sont calculées et comparées pour fournir en sortie un nouveau signal de commande et :

- si (VB - VE) / VB < (p2 - p1) / (1 + p2), le nouveau signal de commande (d) commande la position du point de prise pour augmenter la tension secondaire V1 si ladite tension secondaire est inférieure à une valeur prédéterminée, ou
- si (p2 - p1) / (1 + p2) ≤ (VB - VE) / VB, le nouveau signal de commande bloque la position du point de prise.

10. Procédé selon la revendication 8 lorsque (p2 - p1) / (1 + p2) ≤ (VB - VE) / VB, comprenant en outre, après que la position du point de prise a été bloquée :

- la mesure d'une tension secondaire $V1_s$,
- la comparaison de la tension secondaire $V1_S$ à une valeur seuil $V_{th}$, et
- l'exécution d'un premier délestage de charge si $V1_S \leq V_{th}$.

11. Procédé selon la revendication 10 dans lequel, après que le premier délestage de charge a été exécuté, une nouvelle valeur de (VB - VE) / VB et une nouvelle valeur de (p2 - p1) / (1 + p2) sont calculées et comparées pour fournir en sortie un nouveau signal de commande dépendant du résultat de la comparaison, et

- si $(VB - VE) / VB < (p2 - p1) / (1 + p2)$, le signal de commande (d) commande la position du point de prise pour augmenter la tension secondaire V1 si ladite tension secondaire est inférieure à une valeur prédéterminée, ou
- si $(p2 - p1) / (1 + p2) \leq (VB - VE) / VB$, la position du point de prise reste bloquée.

12. Procédé selon la revendication 11, comprenant en outre, si la position du point de prise reste bloquée :

- la mesure d'une tension secondaire supplémentaire $V1_s$,
- la comparaison de la tension secondaire supplémentaire $V1_s$ à la valeur seuil $V_{th}$, et
- l'exécution d'un délestage de charge supplémentaire si $V_{1s} \leq V_{th}$.

**FIG. 1**

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219591 B
- EP 1217709 A
- US 6249719 B
- GB 2450762 A